# FASCICULE DE BREVET EUROPEEN

(11) **EP 1 953 425 B1**
(45) Date de publication et mention de la délivrance du brevet: **29.06.2011**
(21) Numéro de dépôt: 08300066.1
(22) Date de dépôt: 01.02.2008
(51) Int. Cl.: F16H 61/24

(54) **Dispositif d'accompagnement de passage de vitesses dans une boite de vitesses mécanique d'un véhicule**
Begleitvorrichtung für die Gangschaltung in einem mechanisch gesteuerten Getriebe eines Fahrzeugs
Device for assisted gear changes in a mechanical gearbox of a vehicle

(30) Priorité: 01.02.2007 FR 0753009
(43) Date de publication de la demande: 06.08.2008
(73) Titulaire: Dura Automotive Systems SAS, 91570 Bièvres (FR)
(72) Inventeur: Maitre, Sébastien, 43120, Monistrol sur Loire (FR)
(74) Mandataire: Thivillier, Patrick

(56) Documents cités:
- EP-A- 1 557 592
- EP-A- 1 710 475
- EP-A2- 0 149 338
- DE-A1- 10 210 972

## Description

L'invention se rattache au secteur technique des équipements pour véhicules automobiles et concerne plus particulièrement un dispositif pour le passage des rapports de vitesses dans une boîte de vitesses, notamment dans une boîte de vitesses mécanique.

De manière parfaitement connue, pour un homme du métier, le passage et la sélection des vitesses s'effectuent au moyen d'un levier articulé accouplé, généralement au niveau de sa partie inférieure, aux éléments de commande interne de la boîte de vitesses, par exemple au moyen de câbles. Il est connu également de disposer, entre le câble de passage et la commande interne de la boîte de vitesses une masse d'inertie.

Une solution avantageuse ressort du document EP 1557592 qui divulgue un ensemble indépendant rapporté et disposé, entre une commande de vitesses et la commande interne de la boîte de vitesses pour l'entraînement d'une masse d'inertie au moyen d'un bras de levier accouplé à la commande de vitesses. La masse d'inertie est logée dans un carter présentant des agencements de fixation avec la commande interne de la boîte de vitesses. Le bras est articulé sur un axe disposé sensiblement dans la partie médiane de sa longueur pour délimiter une zone d'accouplement à la commande de vitesses et une zone présentant un secteur cranté formé dans l'épaisseur du bras et coopérant en position d'engrènement avec un pignon solidaire d'un axe d'entraînement en rotation à grande vitesse de la masse; l'axe de rotation du bras, la zone avec le secteur cranté, la masse d'inertie et son pignon d'entraînement solidaires de l'axe, sont montés libres, d'une manière étanche, dans le carter.

Cette solution donne totalement satisfaction. On a cependant observé qu'il est nécessaire d'exercer un effort important au début de la course de passage de vitesses pour l'entraînement en rotation de la masse d'inertie tandis, qu'en fin de course peut se produire un effet de chocs ou de rebonds résultant de l'arrêt de la masse d'inertie préalablement entraînée à grande vitesse.

L'invention s'est fixée pour but de remédier à ces inconvénients d'une manière simple, sûre, efficace et rationnelle.

A partir d'une solution du type de celle définie dans la demande de brevet européen précitée EP 1557592, divulguant toutes les caractéristiques du préambule de la revendication 1, le problème que se propose de résoudre l'invention est d'obtenir une inertie variable en fonction de la course du levier d'entraînement

Pour résoudre un tel problème, le pignon et le secteur cranté sont agencés pour créer un rapport de démultiplication variable apte à générer un moment d'inertie variable en fonction de la course du levier pour permettre, d'une manière concomitante, d'avoir :
■ en début de course du passage de la vitesse, une inertie faible pour l'entraînement de la masse,
■ au moment du passage de la vitesse, une inertie importante,
■ en fin de course, après passage de la vitesse, une inertie faible correspondant à l'arrêt de la masse.

Compte tenu du problème posé à résoudre, les agencements sont déterminés pour qu'avec un entraxe constant, entre l'axe d'entraînement de la masse et l'axe de rotation du levier, le rapport de démultiplication entre le secteur cranté et le pignon, au démarrage et en fin de course, soit inférieur à celui du passage de la vitesse.

Avantageusement, les agencements sont constitués par une variation du rayon primitif de denture du pignon et du secteur, le pignon étant, par exemple, elliptique, tandis que le secteur cranté présente, au niveau de la denture, des zones de rayons primitif différents correspondant aux rapports de démultiplication souhaités.

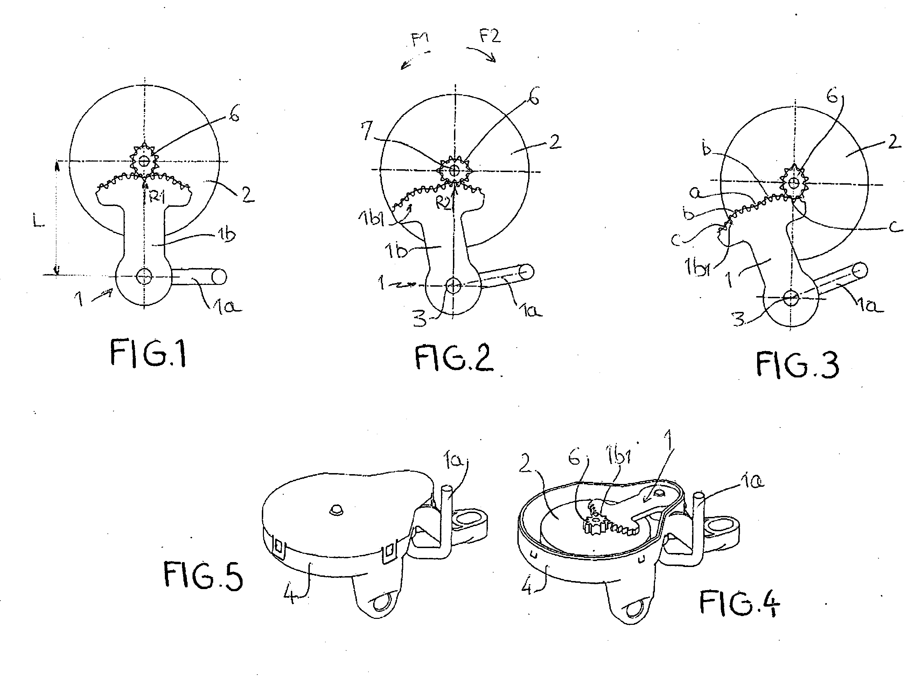

L'invention est exposée ci-après plus en détail à l'aide des figures des dessins annexés dans lesquels :
■ les figures 1, 2 et 3 sont des vues en plan à caractère schématique montrant le principe à la base de l'invention pour l'entraînement en rotation de la masse selon une inertie variable en fonction de la course du levier.
■ la figure 4 montre le montage de la masse d'inertie et des éléments d'entraînement dans un carter de protection.
■ la figure 5 est une vue correspondante à la figure 4 après mise en place du couvercle de protection du carter.

Le dispositif est monté entre le câble ou autre de commande de passage des vitesses accouplé à un levier de manoeuvre et la commande interne de la boîte de vitesses. Le dispositif se présente sous forme d'un ensemble indépendant rapporté et disposé entre la commande de vitesses et la commande interne de la boîte de vitesses.

Comme il ressort de l'enseignement du document EP 1557592, l'ensemble comprend un bras articulé (1) agencé pour permettre l'accouplement du câble de passage et imprimer une vitesse importante à une masse d'inertie (2) apte à transmettre un mouvement d'accélération au niveau dudit bras (1) pour faciliter le passage des vitesses. Le bras (1) est solidaire d'un axe vertical de rotation (3) monté par exemple dans la partie (4) faisant office de carter de protection. Le bras articulé (1) présente une partie (1a) d'accouplement avec le câble de passage et une partie d'entraînement (1b) de la masse d'inertie (2). Comme illustré aux figures des dessins, les parties (1a) et (1b) sont distinctes l'une de l'autre et rendues solidaires de l'axe de rotation (3).

La partie (1b) est constituée par un secteur cranté (1b1) destiné à coopérer en position d'engrènement avec un pignon (6) solidaire d'un axe (7) d'entraînement en rotation de la masse d'inertie (2).

L'entraînement angulaire du levier (1) par rapport à l'axe (3) selon les flèches (F1 et F2) provoque, de manière concomitante, par le secteur cranté (1b1), l'entraînement du pignon (6) et par conséquent de la masse d'inertie (2). L'axe de rotation (3) du bras (1), la zone (1b) avec le secteur cranté (1b1), la masse d'inertie (2) et son pignon d'entraînement (6) solidaires de l'axe (7) sont montés libres, d'une manière étanche, dans le carter (4).

Selon une caractéristique à la base de l'invention, le pignon (6) et le secteur cranté (1b1) sont agencés pour créer un rapport de démultiplication variable apte à générer, pour l'entraînement de la masse d'inertie (2), un moment d'inertie variable en fonction de la course du levier (1).

Le but recherché selon l'invention est d'avoir, à l'engagement de la course de passage de vitesse, une inertie faible pour l'entraînement de la masse (2), puis une inertie importante au moment du passage de la vitesse et, en fin de course, après passage de la vitesse, une inertie faible correspondant à l'arrêt de la masse et égale à l'inertie de départ. Bien évidemment, ces fonctions doivent pouvoir être réalisées, dans un sens quelconque d'entraînement du levier (1) correspondant soit à la montée d'une vitesse soit à la descente d'une vitesse (voir flèches F1 et F2, figures 1, 2 et 3).

Selon l'invention, avec un entraxe constant (L) entre l'axe d'entraînement (7) de la masse et l'axe de rotation (3) du levier (1), le rapport de démultiplication entre le secteur cranté (1b1) et le pignon (6), considéré au démarrage et en fin de course, est inférieur à celui correspondant au passage de la vitesse. Par exemple, à titre indicatif et non limitatif, le rapport de démultiplication, au démarrage et en fin de course est de 6,5, alors que ce rapport de démultiplication est de 9 au moment du passage de la vitesse.

Cette différence de rapport de démultiplication est obtenue par une variation du rayon primitif de la denture du pignon (6) et du secteur cranté (1b1). Dans ce but, comme le montrent les figures des dessins, le pignon (6) est, par exemple, elliptique, alors que le secteur cranté (1b1) présente au niveau de sa denture, des zones (a, b, c) de rayons différents correspondant aux rapports de démultiplication souhaité.

Plus particulièrement, comme indiqué précédemment, le secteur cranté (1b1) présente, par rapport à la zone médiane (a) disposée selon l'axe de symétrie du secteur, de part et d'autre de cette zone, et d'une manière symétrique, les deux autres zones (b et c) afin d'obtenir la différence du rapport de démultiplication dans les deux sens d'entraînement (F1) ou (F2) du secteur, correspondant à la montée ou à la descente d'une vitesse.

Comme le montrent les figures des dessins, le secteur cranté (1b1) présente, en alignement avec son axe de symétrie, la zone (a) et, à chaque extrémité, les zones (c) ; lesdites zones sont identiques et d'un rayon (R1) déterminé et coopérant en position d'engrènement avec le grand rayon du pignon elliptique (6), (figures 1 et 3). Ces deux positions correspondent au rapport de démultiplication inférieur 6,5 dans l'exemple indicatif précité. Entre la zone centrale (a) et les zones d'extrémité (c), les autres zones symétriques (b) sont de rayon (R2) supérieur et coopèrent en position d'engrènement avec le petit rayon (6) (figure 2). Cette position correspond au rapport de démultiplication supérieur (9) dans l'exemple indicatif précité.

A titre indicatif, et non limitatif, en considérant les rapports de démultiplication précités, les valeurs numériques suivantes peuvent être indiquées :
■ entraxe L : 4 mm
■ rayon (R1) : 39 mm
■ rayon (R2) : 40,5 mm
■ grand rayon du pignon elliptique : 6 mm
■ petit rayon du pignon elliptique : 4,5 mm

Ainsi, en position de départ et de fin de course, la démultiplication des engrenages (1b1) et (6) (ou autre disposition de transmission) est de 6,5, cette démultiplication augmentant de façon continue jusqu'à 9 en milieu de passage de vitesse. On rappelle de manière connue que l'inertie est proportionnelle au carré du rapport de démultiplication.

Ces caractéristiques permettent donc de diminuer l'effort important nécessaire au démarrage de la masse d'inertie et d'éviter des effets de chocs ou de rebonds au moment de l'arrêt de ladite masse.

Les avantages ressortent bien de la description.

## Revendications

1. Dispositif d'accompagnement de passage des vitesses dans une boîte de vitesses mécanique d'un véhicule, sous forme d'un ensemble indépendant rapporté et disposé entre une commande de vitesses et la commande interne de la boîte de vitesses, ledit ensemble comprend un bras de levier (1) accouplé à la commande de vitesses et entraînant à grande vitesse une masse d'inertie (2) logée dans un carter (4) présentant des agencements de fixation avec la commande interne de la boîte de vitesses ; ledit bras (1) est articulé sur un axe (3) disposé sensiblement dans la partie médiane de sa longueur pour délimiter une zone d'accouplement (1a) à la commande de vitesses et une zone (1b) présentant un secteur cranté (1b1) coopérant en position d'engrènement avec un pignon (6) solidaire d'un axe (7) d'entraînement en rotation à grande vitesse de la masse (2) ; l'axe de rotation (3) du bras (1), la zone (1b) avec le secteur cranté (1b1), la masse d'inertie (2) et son pignon d'entraînement (6) solidaires de l'axe (7), sont montés libres, d'une manière étanche, dans le carter (4),
**caractérisé en ce que** le pignon (6) et le secteur cranté (1b1) sont agencés pour créer un rapport de démultiplication variable apte à générer une force d'inertie variable en fonction de la course du levier pour permette, d'une manière concomitante, d'avoir :
■ au début de la course de passage de la vitesse, une inertie faible pour l'entraînement de la masse (2),
■ au moment du passage de la vitesse, une inertie importante,
■ en fin de course, après passage de la vitesse, une inertie faible correspondant à l'arrêt de la masse (2).

2. Dispositif selon la revendication 1, **caractérisé en ce que** les agencements sont déterminés pour qu'avec un entraxe constant, entre l'axe d'entraînement (6) de la masse (2) et l'axe de rotation (3) du levier (1), le rapport de démultiplication, entre le secteur cranté (1b1) et le pignon (6), au démarrage et en fin de course, soit inférieur à celui du passage de la vitesse.

3. Dispositif selon la revendication 2, **caractérisé en ce que** les agencements sont constitués par une variation de rayon primitif de denture du pignon (6) et du secteur (1b1).

4. Dispositif selon l'une des revendications 1 à 3, **caractérisé en ce que** le pignon (6) est notamment elliptique, le secteur cranté (1b1) présentant, au niveau de la denture, des zones (a, b, c) de rayons différents correspondant aux rapports de démultiplication souhaités.

5. Dispositif selon la revendication 4 , **caractérisé en ce que** le secteur cranté (1b1) présente des zones (a, b, c) de rayons différents par rapport à un axe de symétrie pour obtenir la différence de rapport de démultiplication dans les deux sens d'entraînement dudit secteur (1b), correspondant à la montée ou à la descente d'une vitesse.

6. Dispositif selon la revendication 5, **caractérisé en ce que** le secteur cranté (1b1) présente en alignement avec son axe de symétrie et à chaque extrémité des zones identiques (a et c) de rayon déterminé et coopérant en position d'engrènement avec le grand rayon du pignon elliptique pour correspondre au rapport de démultiplication inférieure ; entre lesdites zones centrale (a) et d'extrémité (c), les autres zones (b) sont de rayon supérieur et coopèrent en position d'engrènement, avec le petit rayon du pignon elliptique (6) pour correspondre au rapport de démultiplication supérieur.

## Claims

1. Support device for shifting the gears in a manual gearbox of a vehicle, in the form of an added independent unit placed between a gear control and the internal gearbox control, said unit includes a lever arm (1) coupled to the gear control and driving at great speed an inertia mass (2) accommodated in a housing (4) that has arrangements for fixing to the internal gearbox control; said arm (1) is articulated on an axis (3) placed substantially in the median part of its length so as to define a zone for coupling (1a) to the gear control and a zone (1b) that has a notched sector (1b1) cooperating in a meshing position with a sprocket (6) integral with an axis (7) for driving the mass (2) in rotation at great speed; the axis of rotation (3) of the arm (1), the zone (1b) with the notched sector (1b1), the inertia mass (2) and its drive sprocket (6) integral with the axis (7), are mounted free, in a leak-tight manner, in the housing (4),
**characterized in that** the sprocket (6) and the notched sector (1b1) are arranged so as to create a variable gear ratio capable of generating an inertia force that is variable as a function of the lever travel so as to make it possible,
in a concomitant manner, to have:
■ at the onset of the gear shifting travel, a low inertia for driving the mass (2),
■ at the time of shifting the gear, a significant inertia,
■ at travel end, after shifting the gear, a low inertia corresponding to stopping the mass (2).

2. Device as claimed in claim 1, **characterized in that** the arrangements are determined so that with a constant centre distance, between the drive axis (6) of the mass (2) and the axis of rotation (3) of the lever (1), the gear ratio, between the notched sector (1b1) and the sprocket (6), at the onset and at the end of travel, is less than that of the gear shift.

3. Device as claimed in claim 2, **characterized in that** the arrangements are constituted by a variation in the pitch radius of the teeth of the sprocket (6) and of the sector (1b1).

4. Device as claimed in one of claims 1 to 3, **characterized in that** the sprocket (6) is in particular elliptical, the notched sector (1b1) having, on the teeth, zones (a, b, c) of different radii corresponding to the required gear ratios.

5. Device as claimed in claim 4, **characterized in that** the notched sector (1b1) has zones (a, b, c) of different radii relative to an axis of symmetry in order to obtain the gear ratio difference in the two drive directions of said sector (1b), corresponding to the rise or drop of a gear.

6. Device as claimed in claim 5, **characterized in that** the notched sector (1b1) has, in alignment with its axis of symmetry and at each end, identical zones (a and c) of pre-set radius that cooperate in a meshing position with the large radius of the elliptical sprocket so as to correspond to the lower gear ratio; between said central (a) and end (c) zones, the other zones (b) are of higher radius and cooperate, in a meshing position, with the small radius of the elliptical sprocket (6) so as to correspond to the higher gear ratio.

## Patentansprüche

1. Gangschaltbegleitvorrichtung in einem mechanischen Getriebe eines Fahrzeugs in Form einer separaten Baugruppe, die zwischen einer Gangsteuerung und der inneren Steuerung des Getriebes angefügt und angeordnet ist, wobei die besagte Baugruppe einen Hebelarm (1) umfasst, der mit der Gangsteuerung gekoppelt ist und mit großer Geschwindigkeit eine Trägheitsmasse (2) antreibt, die in einem Gehäuse (4) sitzt, das Vorkehrungen für die Befestigung mit der inneren Getriebesteuerung aufweist; der besagte Arm (1) ist an einer Achse (3) angelenkt, die wesentlich im mittleren Teil seiner Länge angeordnet ist, um einen Bereich für die Ankopplung (1a) an die Gangsteuerung und einen Bereich (1b) mit einem gezahnten Sektor (1b1) zu begrenzen, der in Eingriffsposition mit einem Ritzel (6) zusammenwirkt, das mit einer Achse (7) für den Drehantrieb der Masse (2) in großer Geschwindigkeit fest verbunden ist; die Drehachse (3) des Arms (1), der Bereich (1b) mit dem gezahnten Sektor (1b1), die fest mit der Achse (7) verbundene Trägheitsmasse (2) und ihr Antriebsritzel (6) sind frei beweglich und dicht im Gehäuse (4) montiert,
**dadurch gekennzeichnet, dass** das Ritzel (6) und der gezahnte Sektor (1b1) so ausgebildet sind, um ein variables Untersetzungsverhältnis zu schaffen, das geeignet ist, abhängig vom Hub des Hebels eine variable Trägheitskraft zu erzeugen, um gleichzeitig für die nachstehenden Bedingungen zu sorgen:
■ zu Beginn des Gangschaltwegs eine geringe Trägheit für den Antrieb der Masse (2),
■ zum Zeitpunkt der Gangschaltung eine starke Trägheit,
■ am Ende des Wegs, nach dem Einlegen des Gangs, eine geringe Trägheit, die dem Stillstand der Masse (2) entspricht.

2. Vorrichtung nach Anspruch 1, **dadurch gekennzeichnet, dass** die Vorkehrungen so ausgelegt sind, dass das Untersetzungsverhältnis zwischen dem gezahnten Sektor (1b1) und dem Ritzel (6) bei einem konstanten Achsabstand zwischen der Antriebsachse (6) der Masse (2) und der Drehachse (3) des Hebels (1) zu Beginn und am Ende des Laufwegs geringer ist als dasjenige der Gangschaltung.

3. Vorrichtung nach Anspruch 2, **dadurch gekennzeichnet, dass** die Vorkehrungen aus einer Grundradiusänderung der Zahnung des Ritzels (6) und des Sektors (1b1) bestehen.

4. Vorrichtung nach einem der Ansprüche 1 - 3, **dadurch gekennzeichnet, dass** das Ritzel (6) insbesondere elliptisch ist, wobei der gezahnte Sektor (1b1) im Bereich der Zahnung Bereiche (a, b, c) mit unterschiedlichen Radien aufweist, die den gewünschten Untersetzungsverhältnissen entsprechen.

5. Vorrichtung nach Anspruch 4, **dadurch gekennzeichnet, dass** der gezahnte Sektor (1b1) Bereiche (a, b, c) mit unterschiedlichen Radien im Verhältnis zu einer Symmetrieachse aufweist, um das unterschiedliche Untersetzungsverhältnis in den beiden Antriebsrichtungen des besagten Sektors (1b) - entsprechend dem Hoch- oder Herunterschalten eines Gangs - zu erzielen.

6. Vorrichtung nach Anspruch 5, **dadurch gekennzeichnet, dass** der gezahnte Sektor (1b1) in Ausrichtung mit seiner Symmetrieachse und an jedem Ende identische Bereiche (a und c) mit einem bestimmten Radius aufweist und in Eingriffsposition mit dem großen Radius des elliptischen Ritzels zusammenwirkt, um dem unteren Untersetzungsverhältnis zu entsprechen; zwischen dem zentralen Bereich (a) und dem Endbereich (c) haben die anderen Bereiche (b) einen größeren Radius und wirken in Eingriffsposition mit dem kleinen Radius des elliptischen Ritzels (6) zusammen, um dem oberen Untersetzungsverhältnis zu entsprechen.
